# EUROPEAN PATENT SPECIFICATION

(11) **EP 1 519 600 B1**
(45) Date of publication and mention of the grant of the patent: **11.12.2019**
(21) Application number: 04104621.0
(22) Date of filing: 23.09.2004
(51) Int. Cl.: H04L 12/58, H04L 29/08, H04M 3/53, H04W 8/22, H04W 4/12, H04W 92/08

(54) **Providing property data on mobile terminal for services**
Bereitstellung von Eigenschaften in einem mobilen Endgerät
Procédé pour fournir des characteristiques propres a un service sur un terminal mobile

(30) Priority: 26.09.2003 FI 20031393
(43) Date of publication of application: 30.03.2005
(73) Proprietor: Telia Finland Oyj, 00510 Helsinki (FI)
(72) Inventor: Keskiivari, Pekka, 01190, Box (FI)
(74) Representative: Kolster Oy Ab

(56) References cited:
- WO-A1-00/64110
- WO-A1-01/33781
- US-A1- 2003 027 581

## Description

### BACKGROUND OF THE INVENTION

The invention relates to services and in particular to a solution for providing property data on a mobile terminal available to a mobile subscriber for services.

The operation of a mobile communication system is based on cooperation between a mobile station and a mobile communication network, which communicate according to an agreed protocol over the air interface. Through the mobile communication network, the mobile station may communicate with another mobile station in the same mobile communication system. A connection may also be established between mobile stations belonging to two different mobile communication networks that have been connected to each other, or between the mobile communication network and any other terminal when the telecommunication network of the other terminal communicates with the mobile communication network. There may be one or more gateway networks between the mobile communication network and the telecommunication network of the other terminal.

The interface between the mobile station and the mobile communication network is usually strictly defined, for example by international standards. Correspondingly, the functionalities offered by different elements of mobile communication networks have been arranged in a predetermined manner in protocol layers that exchange data. Utilizing the functionalities of the different protocol layers, an application program running in the mobile station may communicate with the application program of a service provider connected to the mobile communication network and thus utilize the services produced by the service provider. Various application protocols are available for implementing applications, but usually there are considerable differences between the acquisition and maintenance of the subscriber-specific data required by the application.

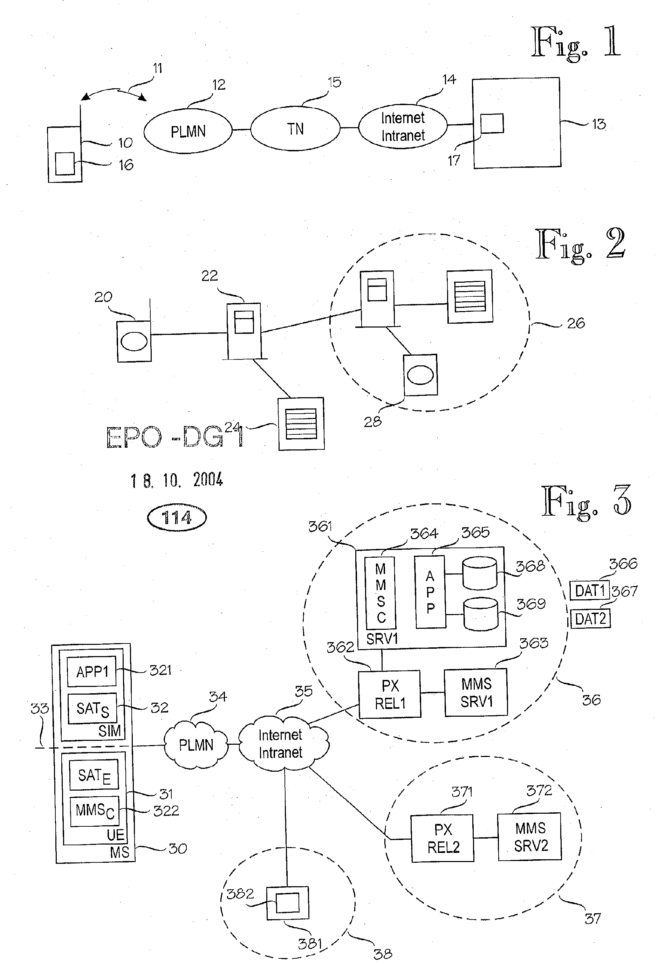

The arrangement described above is illustrated in Figure 1 in accordance with the prior art, the figure showing a mobile station 10, which communicates with a mobile communication network 12 over an air interface 11. A terminal 13 of a service provider communicates with the mobile communication network 12 via a telecommunication network 14 and gateway network 15 of the service provider. Utilizing the network services provided by the mobile communication network 12, gateway network 15 and telecommunication network 14 of the service provider, an application program 16 in the mobile station and an application program 17 in the service provider's terminal may exchange data.

A mobile station is generally deemed as being divided into two components, i.e. a mobile terminal and a subscriber identity module. The subscriber identity module is a module added to a mobile terminal for subscriber identification and subscriber-specific security data. Programs related to the applications used by the subscriber are also typically stored in the subscriber identity module.

Due to the transferability of the subscriber identity module, one subscriber may communicate with the service provider's application program using various mobile terminals. Each mobile terminal substantially offers functionalities according to the air interface 11 protocol, but in addition to these, the range of functionalities used for implementing an application program varies a lot from one mobile terminal to another. If an application program utilizes one or more functionalities not included by default in all mobile terminals, the application program can or may have to be adapted according to the mobile terminal employed by the subscriber at a given time. In some cases, the adaptation can be carried out in the mobile station, but this often requires measures at the service provider's end, too. In order to be able to modify a service to conform to the mobile terminal employed by the subscriber, the service provider needs information on the mobile terminal employed by the subscriber at a given time.

This information is not, however, transmitted automatically to service providers, which may result in problems when the service is used. Since a positive service experience is one of the most important criteria in respect of service usability, elimination of technical insecurity factors of this kind is of primary importance to service providers.

One way of transmitting the data needed to adapt a service is that the subscriber, when changing the mobile terminal, sends a message, for example a short message, to the service provider to inform the latter of the type of the mobile terminal he/she is using. On the basis of the received message, the service provider can adapt his/her service to conform to the functionalities of the mobile terminal. A problem associated with this solution is that it causes extra trouble to the subscriber and its success depends entirely on whether the subscriber remembers to provide the necessary information and gives them in the correct form. The arrangement is also service-specific, i.e. the subscriber may have to send several messages to different service providers each time he/she changes the mobile terminal.

Another way is a procedure used in browser-server systems where the browser and the source server exchange user profile data, which can be utilized in the adaptation of the service to the user's current hardware environment. For example, a UAProf defined by the Wireless Application Protocol Forum describes transfer of user profile data between a WAP browser and a source server. The UAProf utilizes a prior art CC/PP model (composite capabilities/preferences profile) in the transfer of data on terminal hardware properties, software properties, application/user preferences, WAP properties, and network properties. However, this arrangement functions only in the browser-server combination in question, i.e. this way the data are not transmitted to other services.

The Device Management workgroup of the Open Mobile Alliance (OMA) is currently defining general models for managing data concerning mobile terminals, including configuration settings, use parameters, software settings and parameters, application settings and user preferences. For example, the OMA SyncML Device Management protocol defines four protocol packets for the steps of connection establishment and management. The solutions described generically define situations where data are exchanged as well as command sequences for transferring certain parameters. However, the solution described requires support of network nodes and terminals participating in data transfer for the above-mentioned SyncML Device Management protocol that is still in the definition stage. As new services come onto the market and the number of terminal types available increases, it is important to provide an arrangement that solves the problem of ensuring that a service provider receives information on the mobile terminal used by a subscriber at a given time without causing extra trouble to the subscriber or substantial changes to the existing terminals and network elements.

US 2003/027581 discloses a method for automatically initiating provisioning procedures. In US 2003/027581, network detects mobile terminals that require provisioning by means of an IMEI/IMSI-based procedure.

WO 00/64110 discloses a method for delivering multimedia messages. In the first embodiment the terminal, at various predefined conditions, submits information terminal capabilities to the multimedia service center.

WO 01/33781 discloses a multimedia messaging service where information on the properties of the wireless terminal is stored in the multimedia messaging system. A maximum time of validity is set for the property information, and before transmitting a message to the wireless terminal, the system determines whether the property information is still relevant or whether information on the properties of the wireless terminal should be updated before transmitting the message.

### BRIEF DESCRIPTION OF THE INVENTION

The object of the invention is to provide a method and an apparatus implementing the method so that data relevant to applications on a mobile terminal used by a mobile subscriber can be maintained automatically without changes to the existing systems. The object of the invention is achieved by a method and a system which are characterized by what is disclosed in the independent claims. The preferred embodiments of the invention are disclosed in the dependent claims.

The idea underlying the invention is that the identity module identifying a mobile subscriber is always provided with an application which is activated when the mobile terminal is switched on. The application checks the properties of the mobile terminal in use and, if it notes changes in the properties, it forwards information to a server maintaining data in the network and updates the information in the subscriber identity module.

An advantage of the method and system of the invention is that data on selected properties of the mobile terminal in use can be maintained automatically in the network side, and thus the data are easily retrievable for various applications.

The invention is defined by the mobile station, the telecommunication system and the method of the independent claims.

### BRIEF DESCRIPTION OF THE FIGURES

The invention will now be described in connection with examples, with reference to the accompanying drawings, in which:
Figure 1 is a block diagram illustrating a prior art solution for providing application services for a mobile subscriber;
Figure 2 is a general block diagram illustrating elements related to the transfer of multimedia messages;
Figure 3 illustrates a system;
Figure 4 is a block diagram illustrating a functional description of a mobile station;
Figure 5 is a block diagram illustrating a functional implementation of a server of a service provider;
Figure 6 illustrates steps of a method; and
Figure 7 illustrates a second method.

### DETAILED DESCRIPTION OF THE INVENTION

The present invention is applicable to any mobile communication system where a mobile subscriber has a transferable subscriber identity module at his/her disposal and where the subscriber can utilize a service of offered by a service provider communicating with the mobile communication network by at least two different mobile terminals employing the transferable subscriber identity module. Such systems include third-generation mobile communication systems, such as the Universal Mobile Telecommunication System (UMTS), and mobile communication systems corresponding to the global GSM system (Global System for Mobile Communications), such as GSM 1800 and PCS (Personal Communication System), and systems based on the above-mentioned ones, such as GSM 2+ systems. Services of the GSM 2+ stage include GPRS (General Packet Radio Service) and CAMEL (Customised Applications for Mobile network Enhanced Logic). The invention is also applicable to fixed systems satisfying the conditions described above.

The present invention is utilizable in connection with any service available to a mobile subscriber that can or has to be modified according to the subscriber terminal used by the subscriber at a given time. In the following, the invention will be described using an example, i.e. in connection with transmission and reception of multimedia messages, without in any way limiting the invention to this application or to the terminology used.

Figure 2 is a general block diagram illustrating elements related to the transfer of multimedia messages. It should be noted that Figure 2 illustrates logical elements and takes thus no stand on how these elements are implemented in separate physical devices. An MMS client 20 is a system element interacting with the mobile subscriber. Typically, the MMS client 20 is implemented as an application of the mobile station. An MMS proxy server 22 is an element which communicates with other communication systems. An MMS server 24 is responsible for storing messages and communicates with the MMS client 20 via the MMS proxy server 22. In some systems, the MMS proxy server and MMS client are integrated.

In a typical use, a first mobile subscriber activates a first MMS client 20 provided in the mobile station, selects or enters the target address of a multimedia message by input means of the first mobile station, e.g. a keypad, creates the message to be sent and gives, via the first MMS client, a command to transmit the message. The first MMS client transmits the message over the air interface to a predetermined MMS proxy server 22, which forwards the message to the first MMS server 24, which stores it. The MMS proxy server 22 transmits a notification to a second MMS client 28 of a second MMS system 26 according to the target address on a message addressed to it. The second MMS client 28 retrieves the multimedia message from the first MMS server 24 and informs the mobile subscriber of the second MMS client 28 of the received message. When the mobile subscriber of the second MMS client 28 requests display of the received message, the second MMS client 28 outputs the message using the output means of the second mobile station in use, such as a screen.

The information on whether the device used by the mobile subscriber includes an MMS client is not transmitted automatically to a service provider. A subscriber provided with an MMS client typically wants to utilize the features offered by MMS services, for example images and other graphic presentations. On the other hand, a subscriber with no MMS client available may be interested in utilizing the service, even its simpler version. An example could be a weather service, where the subscriber requests weather information on a desired area. The weather information submitted as an MMS message may include a graphical presentation of clouds moving across the location. If the subscriber is using a simpler terminal not supporting multimedia messaging, it is more appropriate to transmit him/her the weather information on the place in question as numerical data, which express the temperature and the wind direction and velocity. To be able to modify a service to conform to the subscriber's terminal, the service provider needs information on whether the subscriber is using a mobile terminal supporting multimedia messaging or not.

The present invention utilizes an application which is stored in the subscriber identity module and is activated automatically in a certain situation related to the use of the identity module, and thus takes care of transferring the data on the device used by the subscriber to the service provider. The example being described utilizes for this purpose a SIM Application Toolkit arrangement defined in connection with GSM standardisation. In third generation UMTS systems, the corresponding arrangement is known as a USIM Application Toolkit, and in this respect, the invention is naturally applicable to any arrangement enabling interaction between the subscriber identity module and the mobile terminal in the required manner.

The SIM Application Toolkit defines an interface between the subscriber identity module of the GSM subscriber, i.e. a SIM card, and the mobile terminal. The purpose of this interface is to provide mutual interoperability independent of SIM cards and mobile terminal producers or operators. The SIM Application Toolkit allows the SIM card to interact and cooperate with any mobile terminal that supports functionalities in accordance with the SIM Application Toolkit interface.

One of the SIM Application Toolkit mechanisms comprises loading of a mobile terminal profile, in which case the mobile terminal indicates the functionalities defined as relevant to the SIM Application Toolkit functionality it supports. On the basis of the data provided by this mechanism, the subscriber identity module can modify its SIM Application Toolkit functionality according to the capabilities of the mobile station. The information that the mobile terminal supports MMS is not typically transferred in connection with the loading of the profile.

Proactive SIM is a mechanism by means of which the SIM may activate mobile terminal functionalities. Such functionalities include outputting text from the SIM card to the mobile terminal, transmitting a short message, establishing a call to a number stored in the SIM card, transmitting a value added service control message or a USSD symbol sequence, playing sound through the earpiece, initiating a dialogue with the subscriber, offering local data from the mobile terminal to the SIM card, implementing an AT command received from the SIM card, and returning a possible result to the SIM card, etc.

The SIM Application Toolkit also provides a mechanism for downloading information to a SIM card as well as a mechanism for transferring a menu alternative of the subscriber's SIM application to the SIM card. Correspondingly, a functionality can be activated where the SIM controls call establishment by directing all dialled numbers or symbol sequences of value added services to the SIM card before call establishment or implementation of a value added service, in which case the SIM card may allow, prevent or modify the call establishment or value added service. Corresponding control functionality can also be provided for mobile-originating short messages.

Figure 3 illustrates and example of a system . A mobile station 30 is an integrated entity formed by a mobile terminal 31 and a subscriber identity module 32, here a SIM card, which is connected electrically to the mobile terminal. An interface 33, in this example the SIM Application Toolkit, has been defined between the mobile terminal 31 and the subscriber identity module 32, which can interact in a predetermined manner over the interface. The mobile station 30 functions in a mobile communication network 34, which communicates with a telecommunication network 35 via a predetermined gateway centre, the telecommunication network comprising one or more interconnected local area networks 36, 37, 38.

One of the local area networks is the local area network 36 of the first service provider, which includes a server 361 related to a certain network service, an MMS proxy server 362 and MMS server 363 of the service provider. The server 361 related to the network service includes an MMS client 364 and application software 365 of the first service provider.

Another local area network in the telecommunication network is an MMS network 37, which serves subscribers in the mobile communication network and includes an MMS proxy server 371 and MMS server 372 of the mobile communication network.

In the example being illustrated, the server 361 of the first service provider comprises application software of the first service provider, which maintains data related to a certain subject (e.g. weather, sports result, exchange rate, etc.) and generates, in response to a request by the mobile subscriber, up-to-date data on this specific subject for submission to the subscriber's mobile station.

For utilization of the application software, application software 321 of the mobile station corresponding to the application software 365 of the first service provider is stored in the mobile station 30. When the mobile subscriber calls the application software 321 with certain parameters, the application software 321 of the mobile station generates a multimedia message, whose content corresponds to the request for activating the application software of the first service provider, provides the message with the address of the MMS client 364 of the first service provider and requests transmission of the message. The message is transferred via the mobile communication network 34 and telecommunication network 35 to the MMS proxy server 371 of the mobile communication network, which stores the message in the MMS server 372 of the mobile communication network. The proxy server 371 of the mobile communication network also transmits data on the message stored in the MMS server 372 of the mobile communication network to the MMS client 364 of the first service provider.

The application software 365 of the first service provider receives the mobile subscriber's request in the format required by it and generates content corresponding to the request. However, the content corresponding to the request can be generated in two or more formats so that the content corresponds to the request transmitted by the mobile subscriber but provides information in the format modified according to the properties of the receiving mobile terminal. In Figure 3, this is illustrated by content format DAT1 366, which corresponds to the content generated for a mobile station supporting multimedia messaging, and content format DAT2 367, which corresponds to the content generated for transmission to a mobile terminal not supporting reception of multimedia messages. To be able to select the correct content format for transmission to the mobile subscriber, the application software needs information on whether the mobile terminal currently used by the mobile subscriber supports multimedia messaging or not.

In the arrangement according to the invention, the application software of the mobile station is arranged to be activated always when the mobile terminal is switched on. On activation, the application software is arranged to determine the selected properties of the mobile terminal 31 on the basis of the functionalities of the interface between the mobile terminal and the subscriber identity module. After the data have been determined, they are compared with the corresponding previously stored data. If the data have changed, the application software of the mobile station is arranged to generate a message containing at least information on the changes noticed. The application software of the mobile station stores new data and transmits a generated message to the application software of the service provider.

The application software of the service provider stores the data, after which they are available to the application software for modification of the content in accordance with the subscriber's mobile terminal. Thanks to this arrangement, up-to-date data on the selected properties of the mobile terminal used by the subscriber are constantly stored in the server in the network side for utilization in connection with other services. Since the data flow from the subscriber identity module to the server is based on application software that can be updated over the air interface, the arrangement enables provision of data relevant to new services in a reliable manner without causing extra trouble to the mobile subscriber. This is relevant to the implementation of new push-up services, in particular.

In the example shown in Figure 3, the application software 321 on the SIM card 32 of the mobile station is activated automatically each time the mobile terminal 31 is switched on. The application utilizes the memory of the SIM card where it maintains the IMEI code (International Mobile Station Equipment Identity) of the mobile terminal. The application software gives a Proactive SIM command 'PROVIDE LOCAL INFORMATION' of the SIM Application Toolkit, the command requesting the mobile terminal to transmit the current local information to the SIM card. In addition to other data, the local information of the 'PROVIDE LOCAL INFORMATION' command includes the IMEI code of the mobile terminal.

When the mobile terminal returns the requested local information, the application software checks whether the IMEI code is the same as the stored IMEI code. If the code has changed, the application software updates the new IMEI code to the memory. Simultaneously, the software application generated a short message addressed to the server of the first service provider and transmits it to the number reserved for the server of the first service provider, which is preferably an SMS number.

The application software of the first service provider's server utilizes the server memory and maintains a first database 368 there, which contains a mapping between the address data identifying the identity module of each subscriber and the data describing a certain property of the mobile terminal. In the example shown in Figure 3, the exemplary record format is at its simplest <MSISDN,IMEI>, i.e. the first portion comprises 16 symbols that define the subscriber's mobile number (Mobile Subscriber International ISDN Number) and the second portion comprises 19 symbols that define the mobile equipment identity (IMEI). A second database 369 is also stored in the server, which contains information on whether the mobile terminal with the IMEI code in question supports reception of multimedia messages. In that case, the corresponding exemplary record format is at its simplest <IMEI,TRUE/FALSE>, i.e. the first portion comprises 19 symbols that define the mobile equipment identity (IMEI) and the second portion comprises one symbol that indicates whether support exists (1=TRUE) or not (0=FALSE).

When an application, which can or has to modify the content transmitted by it to conform to the receiving mobile terminal, requires data on the properties of the mobile terminal currently used by a mobile subscriber, it transmits a request to the service provider's server and receives the desired data in response.

In the case of Figure 3, the application software 365 of the first service provider checks, having received a request from the subscriber as described above, the IMEI code of the subscriber's terminal in the first database 368 and after that, it checks, on the basis of the IMEI code, the second database 369 whether the mobile terminal corresponding to this code includes an MMS client 322 or not. If the mobile terminal includes an MMS client, it produces a message comprising the content in the DAT1 format. If the mobile terminal includes no MMS client, it produces a message comprising the content in the DAT2 format.

The service requiring information may also be a service other than the service operator's own service, and modification of the service may mean that the decision to transmit or not to transmit a multimedia message is made on the basis of the receiving mobile terminal. Figure 3 illustrates an example where application software 382 used on the server 381 of the second service provider in the second local area network 38 wants to transmit a notification to selected clients of the mobile communication network 34 as a push service. The notification contains an image whose display requires that a mobile terminal suitable for receiving multimedia messages should be available to the mobile subscriber. To be able to determine the mobile subscribers capable of receiving the notification, the application software 382 of the second service provider transmits a list on the selected mobile subscribers as an inquiry to the first service provider's application software 365. The first service provider's application software checks the IMEI code corresponding to the MSISDN number of each mobile subscriber on the list in the first database 368, and the information corresponding to each IMEI code on the support for reception of a multimedia message or the lack of it in the second database 369. It should be noted that if the application software inquiring the information is managed by the second service provider, both the inquiring and the replying application software have to include sufficient security processes known per se, for example inter-server authentication and content verification.

Another example utilizes a Proactive SIM command 'RUN AT COMMAND'. Using this command, the SIM card can give an AT command as if it had been given by a terminal connected to the mobile terminal. By means of AT commands +CGMI, +CGMM and +CGMR, the SIM card can find out the producer of the mobile terminal, its type and its version, respectively. The application software 321 of the mobile station compares the data it has received with previously stored data, and if even a single data item has changed, it updates the new data to the SIM card 32 and transmits an update message to the service provider's application software 365 as described above.

In another example, the application software of the first service provider is arranged to modify the data received from the mobile station so as to provide data in a processed form to various applications. Preferably, this is performed by expanding the record format of the second database. On the basis of the IMEI code, for example, various kinds of data on the properties of the mobile station can be determined, such as the producer, model number, screen size, screen resolution, number of colours, etc. By storing a selected part of the data concerning mobile terminal properties corresponding to the IMEI code in the second database 369, a mapping is obtained which can be used for adapting the service according to the properties of the receiving mobile terminal. Such adaptation means, for example, modification of the content to be transmitted on the basis of the properties of the receiving mobile terminal or distinguishing mobile subscribers using mobile terminals provided with the desired properties to offer content utilizing the properties in question.

It should be noted that the network configuration presented describes only the elements necessary for illustrating the example and the units have been analyzed on the basis of logical functionalities included in the procedure. For example, servers, MMS servers and proxy servers can be placed differently in a network, and they can be integrated into the same network elements or divided into several elements. Correspondingly, the first database and the second database can be integrated or separate from each other.

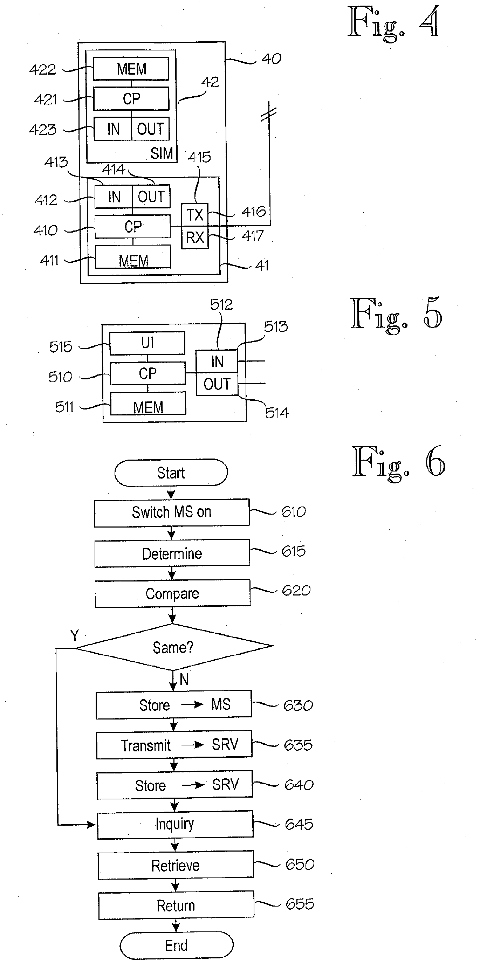

As regards a more detailed functional description of the mobile station, reference is made to the block diagram in Figure 4. The mobile station 40 comprises a mobile terminal 41 and a detachable subscriber identity module 42. The mobile terminal 41 comprises processing means 410, i.e. an element including an arithmetic logic unit, a number of special registers, and control circuits. The processing means are provided with a memory unit, or memory means 411, i.e. a data storage system where computer-readable data or programs or user data can be stored. The memory means typically include memory units enabling reading and writing functions (Read-and-Write Memory, RAM) and memory units from which data can be only read (Read-Only-Memory, ROM). In addition, the mobile terminal comprises an interface element 412, which comprises an input or input means 413 for receiving information that is to be processed in internal processes of the mobile terminal, and an output or output means 414 for outputting information on the internal processes of the mobile terminal. The input means 413 preferably include elements for receiving data from the subscriber, the elements comprising, for example, a keypad, a touch screen, a microphone, etc. The input means 413 preferably also include elements for receiving data from another unit attached to the mobile terminal. An example of such a unit is a personal computer connected to the mobile terminal by a wire, infrared connection, Bluetooth connection or the like. The input means 413 further include elements for receiving data from a subscriber identity module attached to the mobile terminal. The output means 414 preferably include elements for outputting data to a subscriber, for example a screen, a touch screen, a loud speaker, etc. The output means 414 preferably include elements corresponding to the input means for outputting data to another unit connected to the mobile terminal and to a subscriber identity module. The mobile terminal 41 further comprises a radio part 415, which is connected to the processing means 410, and includes means 416 for receiving data via a radio interface and for processing the received data for submission to the processing means 410. The radio part also comprises transmitting means 417 for receiving data from the processing means 410 and for transmitting data over the radio interface. The processing means 410, memory means 411, interface element 412 and radio unit 415 are connected electrically to one another for systematic processing of received and/or stored data according to predetermined, substantially programmed procedures. The implementation of the logic units of the mobile terminal is known per se to a person skilled in the art.

The subscriber identity module 42 correspondingly comprises processing means 421, i.e. an element including an arithmetic logic unit, a number of special registers, and control circuits. The processing means 421 are provided with a memory unit, or memory means 422, i.e. a data storage system where computer-readable data or programs or user data can be stored. The memory means 422 typically include memory units enabling reading and writing functions (Read-and-Write Memory, RAM) and memory units from which data can be only read (Read-Only-Memory, ROM). In addition, the subscriber identity module comprises an interface element 423, which comprises an input or input means 424 for receiving information that is to be processed in internal processes of the subscriber identity module, and an output or output means 425 for giving data on the internal processes of the subscriber identity module. The processing means 421, memory means 422 and interface element 423 are connected electrically to one another for systematic processing of received and/or stored data according to predetermined, substantially programmed procedures. One such procedure is the solution described in connection with Figures 3 and 5 for maintaining data on a mobile terminal in use and transferring them to a first service provider.

Figure 5 is a block diagram illustrating functional implementation of a server of a service provider. The server comprises a processor or processing means 510, i.e. an element including an arithmetic logic unit, a number of special registers, and control circuits. The processing means are provided with a memory unit, or memory means 511, i.e. a data storage system where computer-readable data or programs or user data can be stored. The memory means typically include memory units enabling reading and writing functions (Read-and-Write Memory, RAM) and memory units from which data can be only read (Read-Only-Memory, ROM). In addition, the server comprises an interface element 512, which comprises an input or input means 513 for receiving data from the telecommunication network and for transmitting them to processing in internal processes of the server, and an output or output means 514 for outputting data on the internal processes of the server to the telecommunication network. The server preferably also includes a user interface 515, which comprises elements for outputting data to the subscriber, the elements comprising, for example, a keypad, a touch screen, a loud speaker, etc. The processing means 510, memory means 511 and user interface 515 are connected electrically to one another for systematic processing of received and/or stored data according to predetermined, substantially programmed procedures. Such procedures include the functions according to the solution described in Figures 3 and 6. The implementation of the described logical units of the server is known per se to a person skilled in the art.

Figure 6 illustrates steps of a method. The steps are implemented in the system elements described above utilizing the means described above. The method starts from a situation where the mobile terminal and the subscriber identity module are connected to each other, i.e. where the mobile station is switched on in the example described above (step 610) and the SIM card is activated by keying in an acceptable code. The subscriber identity module determines (step 615) one or more selected mobile terminal properties selected as are relevant to the applications via an interface provided between the subscriber identity module and the mobile terminal. Having received the requested data, the subscriber identity module compares them with the previously stored data (step 620). If the data are substantially identical to the previously stored data, the procedure continues from step 645. If the data are not substantially identical, the data are stored (step 630) in the subscriber identity module and transmitted (step 635) to the server of the first service provider. The data are stored (step 640) in the server. In step 645, software application, which is either the application software related to a service of the first service provider or the application software of another service provider, transmits an inquiry to the first service provider's server to find out data that are relevant to the implementation of the application. Up-to-date data are retrieved from the database (step 650) by means of the arrangement and returned to the party that sent the inquiry (step 655).

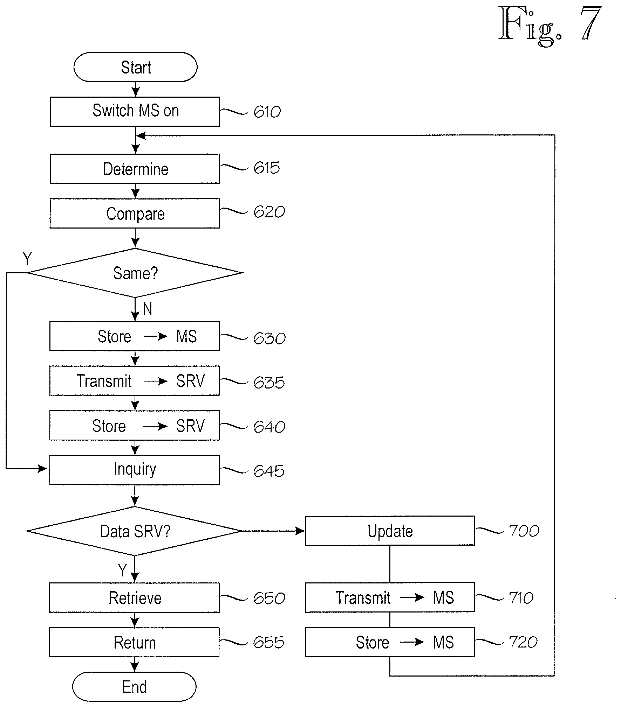

Figure 7 illustrates a second example of the method, the example including the steps illustrated in Figure 6 as well as new ones. In the above-mentioned situation the first service provider notes a new service in respect of which a mobile terminal property on which the service provider maintains no data on its server is relevant. In that case, the first service provider may update (step 700) the application software of the server and that of the subscriber identity module so that the missing property or properties are added to the data to be determined in step 615 and to the data to be stored in step 640. Utilizing the feature offered by the SIM Application Toolkit, the updated application software is transmitted (step 710) to the mobile stations in the mobile communication network over the air interface. After the subscriber has received the update and accepted (step 720) its storage in the subscriber identity module, the mobile station's application continues the procedure of Figure 6 from step 615.

## Claims

1. A mobile station (30) comprising a mobile terminal (31), a transferable subscriber identity module (32), and an application interface (33), i.e., a SIM Application Toolkit (33), between the mobile terminal and the subscriber identity module, the subscriber identity module comprising means for storing data, **characterized in that** the subscriber identity module comprises
means (321) for inquiring selected property data, i.e., properties of the mobile terminal on the basis of the functionalities of the interface between the mobile terminal and the subscriber identity module and, the IMEI code of the mobile terminal, from the mobile terminal over the application interface, the means being arranged to be activated in response to the connecting of the subscriber identity module and the mobile terminal, i.e., automatically each time the mobile terminal is switched on;
means (321) for comparing the inquired property data, i.e., properties of the mobile terminal on the basis of the functionalities of the interface between the mobile terminal and the subscriber identity module and, the IMEI code of the mobile terminal with the data stored in the subscriber identity module;
means (321) for transmitting a message concerning the selected property data to a predetermined server and for updating the data stored in the subscriber identity module in response to the inquired property data, i.e. either the properties of the mobile terminal on the basis of the functionalities of the interface between the mobile terminal and the subscriber identity module or the IMEI code of the mobile terminal, being different from the stored property data.

2. A mobile station according to claim 1, **characterized in that** the selected property data have been determined in the subscriber identity module (32) by means of application software updatable over the air interface.

3. A mobile station according to claim 1, **characterized in that** the application software is a SIM Application Toolkit.

4. A mobile station according to claim 3, **characterized in that** the selected data includes the IMEI code of the mobile terminal.

5. A telecommunication system comprising a mobile communication network (34), a mobile station (30) operating in the mobile communication network, and a server (361) communicating with the mobile communication network, the mobile station comprising a mobile terminal (31), a transferable subscriber identity module (32), and an application interface (33)), i.e., a SIM Application Toolkit (33), between the mobile terminal and the subscriber identity module, the subscriber identity module comprising means for storing data, and the server comprising means for transmitting data to and receiving data from a mobile subscriber in the mobile communication network, **characterized in that** the subscriber identity module (32) of the mobile station comprises
means (321) for inquiring selected property data, i.e., properties of the mobile terminal on the basis of the functionalities of the interface between the mobile terminal and the subscriber identity module and, the IMEI code of the mobile terminal, from the mobile terminal over the application interface, the means being arranged to be activated in response to the connecting of the subscriber identity module and the mobile terminal, i.e., automatically each time the mobile terminal is switched on;
means (321) for comparing the inquired property data, i.e., properties of the mobile terminal on the basis of the functionalities of the interface between the mobile terminal and the subscriber identity module and, the IMEI code of the mobile terminal with the data stored in the subscriber identity module;
means (321) for transmitting a message concerning the selected property data to a certain server and for updating the data stored in the subscriber identity module in response to the inquired property data, i.e. either the properties of the mobile terminal on the basis of the functionalities of the interface between the mobile terminal and the subscriber identity module or the IMEI code of the mobile terminal, being different from the stored property data;
and that the server (361) comprises:
means (364) for receiving property data on the mobile terminal from the mobile subscriber;
a first database (366) for storing a first set of selected properties of the mobile terminal currently in use in a mobile subscriber specific manner.

6. A method of providing property data on a mobile terminal available to a mobile subscriber, **characterized by**
inquiring (615) selected property data, i.e., properties of the mobile terminal on the basis of the functionalities of the interface between the mobile terminal and the subscriber identity module and, the IMEI code of the mobile terminal, from the mobile terminal over an application interface, i.e., a SIM Application Toolkit (33), in response to the connecting of a subscriber identity module and the mobile terminal, i.e., automatically each time the mobile terminal is switched on;
comparing (620) the inquired property data, i.e., properties of the mobile terminal on the basis of the functionalities of the interface between the mobile terminal and the subscriber identity module and, the IMEI code of the mobile terminal with the data stored in the subscriber identity module;
transmitting (635) a message on the selected data to a predetermined server in response to the inquired data, i.e. either the properties of the mobile terminal on the basis of the functionalities of the interface between the mobile terminal and the subscriber identity module or the IMEI code of the mobile terminal, being different from the stored data;
storing (630) a first set of selected properties of the mobile terminal currently in use in a mobile subscriber specific manner;
updating the data stored in the subscriber identity module in response to the inquired property, i.e. either the properties of the mobile terminal on the basis of the functionalities of the interface between the mobile terminal and the subscriber identity module or the IMEI code of the mobile terminal,being different from the stored property data.

## Patentansprüche

1. Mobilstation (30), die ein mobiles Endgerät (31), ein übertragbares Teilnehmer-Identifikationsmodul (Subscriber Identity Module - SIM) (32) und eine Anwendungsschnittstelle (33), d. h. ein SIM Application Toolkit (33), zwischen dem mobilen Endgerät und dem Teilnehmer-Identifikationsmodul umfasst, wobei das Teilnehmer-Identifikationsmodul Mittel zum Speichern von Daten umfasst, **dadurch gekennzeichnet, dass** das Teilnehmer-Identifikationsmodul umfasst:
Mittel (321) zum Abfragen ausgewählter Eigenschaftsdaten, d. h. Eigenschaften des mobilen Endgeräts basierend auf den Funktionalitäten der Schnittstelle zwischen dem mobilen Endgerät und dem Teilnehmer-Identifikationsmodul und dem IMEI-Code des mobilen Endgeräts, von dem mobilen Endgerät über die Anwendungsschnittstelle, wobei die Mittel eingerichtet sind, um als Reaktion auf das Verbinden des Teilnehmer-Identifikationsmoduls und des mobilen Endgeräts, d. h. automatisch jedes Mal, wenn das mobile Endgerät eingeschaltet wird, aktiviert zu werden;
Mittel (321) zum Vergleichen der abgefragten Eigenschaftsdaten, d. h. Eigenschaften des mobilen Endgeräts, basierend auf den Funktionalitäten der Schnittstelle zwischen dem mobilen Endgerät und dem Teilnehmer-Identifikationsmodul und dem IMEI-Code des mobilen Endgeräts, mit den in dem Teilnehmer-Identifikationsmodul gespeicherten Daten;
Mittel (321) zum Senden einer Nachricht, die die ausgewählten Eigenschaftsdaten betrifft, an einen vorbestimmten Server und zum Aktualisieren der in dem Teilnehmer-Identifikationsmodul gespeicherten Daten als Reaktion darauf, dass die abgefragten Eigenschaftsdaten, d. h. entweder die Eigenschaften des mobilen Endgeräts basierend auf den Funktionalitäten der Schnittstelle zwischen dem mobilen Endgerät und dem Teilnehmer-Identifikationsmodul oder dem IMEI-Code des mobilen Endgeräts, sich von den gespeicherten Eigenschaftsdaten unterscheiden.

2. Mobilstation nach Anspruch 1, **dadurch gekennzeichnet, dass** die ausgewählten Eigenschaftsdaten in dem Teilnehmer-Identifikationsmodul (32) mittels Anwendungssoftware bestimmt wurden, die über die Luftschnittstelle aktualisierbar ist.

3. Mobilstation nach Anspruch 1, **dadurch gekennzeichnet, dass** die Anwendungssoftware ein SIM Application Toolkit ist.

4. Mobilstation nach Anspruch 3, **dadurch gekennzeichnet, dass** die ausgewählten Daten den IMEI-Code des mobilen Endgeräts umfassen.

5. Telekommunikationssystem, das ein Mobilfunknetz (34), eine Mobilstation (30), die in dem Mobilfunknetz betrieben wird, und einen Server (361) umfasst, der mit dem Mobilfunknetz kommuniziert, wobei die Mobilstation ein mobiles Endgerät (31), ein übertragbares Teilnehmer-Identifikationsmodul (32) und eine Anwendungsschnittstelle (33), d. h. ein SIM Application Toolkit (33), zwischen dem mobilen Endgerät und dem Teilnehmer-Identifikationsmodul umfasst, wobei das Teilnehmer-Identifikationsmodul Mittel zum Speichern von Daten umfasst und der Server Mittel zum Senden von Daten an und Empfangen von Daten von einem mobilen Teilnehmer in dem Mobilfunknetz umfasst, **dadurch gekennzeichnet, dass** das Teilnehmer-Identifikationsmodul (32) der Mobilstation umfasst:
Mittel (321) zum Abfragen ausgewählter Eigenschaftsdaten, d. h. Eigenschaften des mobilen Endgeräts basierend auf den Funktionalitäten der Schnittstelle zwischen dem mobilen Endgerät und dem Teilnehmer-Identifikationsmodul und dem IMEI-Code des mobilen Endgeräts, von dem mobilen Endgerät über die Anwendungsschnittstelle, wobei die Mittel eingerichtet sind, um als Reaktion auf das Verbinden des Teilnehmer-Identifikationsmoduls und des mobilen Endgeräts, d. h. automatisch jedes Mal, wenn das mobile Endgerät eingeschaltet wird, aktiviert zu werden;
Mittel (321) zum Vergleichen der abgefragten Eigenschaftsdaten, d. h. Eigenschaften des mobilen Endgeräts basierend auf den Funktionalitäten der Schnittstelle zwischen dem mobilen Endgerät und dem Teilnehmer-Identifikationsmodul und dem IMEI-Code des mobilen Endgeräts, mit den in dem im Teilnehmer-Identifikationsmodul gespeicherten Daten;
Mittel (321) zum Senden einer Nachricht, die die ausgewählten Eigenschaftsdaten betrifft, an einen bestimmten Server und zum Aktualisieren der in dem Teilnehmer-Identifikationsmodul gespeicherten Daten als Reaktion darauf, dass die abgefragten Eigenschaftsdaten, d. h. entweder die Eigenschaften des mobilen Endgeräts basierend auf den Funktionalitäten der Schnittstelle zwischen dem mobilen Endgerät und dem Teilnehmer-Identifikationsmodul oder dem IMEI-Code des mobilen Endgeräts, sich von den gespeicherten Eigenschaftsdaten unterscheiden;
und dass der Server (361) umfasst:
Mittel (364) zum Empfangen von Eigenschaftsdaten über das mobile Endgerät von dem mobilen Teilnehmer;
eine erste Datenbank (366) zum Speichern einer ersten Menge von ausgewählten Eigenschaften des gegenwärtig auf eine für den mobilen Teilnehmer spezifische Weise verwendeten mobilen Endgeräts.

6. Verfahren zum Bereitstellen von Eigenschaftsdaten über ein mobiles Endgerät, das für einen mobilen Teilnehmer verfügbar ist, **gekennzeichnet durch**:
Abfragen (615) ausgewählter Eigenschaftsdaten, d. h. Eigenschaften des mobilen Endgeräts basierend auf den Funktionalitäten der Schnittstelle zwischen dem mobilen Endgerät und dem Teilnehmer-Identifikationsmodul und dem IMEI-Code des mobilen Endgeräts, von dem mobilen Endgerät über eine Anwendungsschnittstelle, d. h. ein SIM Application Toolkit (33), als Reaktion auf das Verbinden eines Teilnehmer-Identifikationsmoduls und des mobilen Endgeräts, d. h. automatisch jedes Mal, wenn das mobile Endgerät eingeschaltet wird;
Vergleichen (620) der abgefragten Eigenschaftsdaten, d. h. Eigenschaften des mobilen Endgeräts basierend auf den Funktionalitäten der Schnittstelle zwischen dem mobilen Endgerät und dem Teilnehmer-Identifikationsmodul und dem IMEI-Code des mobilen Endgeräts, mit den in dem Teilnehmer-Identifikationsmodul gespeicherten Daten;
Senden (635) einer Nachricht über die ausgewählten Daten an einen vorbestimmten Server als Reaktion darauf, dass die abgefragten Daten, d. h. entweder die Eigenschaften des mobilen Endgeräts basierend auf den Funktionalitäten der Schnittstelle zwischen dem mobilen Endgerät und dem Teilnehmer-Identifikationsmodul oder dem IMEI-Code des mobilen Endgeräts, sich von den gespeicherten Daten unterscheiden;
Speichern (630) einer ersten Menge von ausgewählten Eigenschaften des mobilen Endgeräts, das gegenwärtig auf eine für den mobilen Teilnehmer spezifische Weise verwendet wird;
Aktualisieren der in dem Teilnehmer-Identifikationsmodul gespeicherten Daten als Reaktion darauf, dass die abgefragten Eigenschaften, d. h. entweder die Eigenschaften des mobilen Endgeräts basierend auf den Funktionalitäten der Schnittstelle zwischen dem mobilen Endgerät und dem Teilnehmer-Identifikationsmodul oder dem IMEI-Code des mobilen Endgeräts, sich von den gespeicherten Eigenschaftsdaten unterscheiden.

## Revendications

1. Station mobile (30) qui comprend un terminal mobile (31), un module d'identité d'abonné transférable (32), et une interface d'application (33), c'est-à-dire, une boîte à outils d'application SIM (33), entre le terminal mobile et le module d'identité d'abonné, dans laquelle le module d'identité d'abonné comprend des moyens pour mémoriser des données, **caractérisée en ce que** le module d'identité d'abonné comprend :
des moyens (321) pour demander des données de propriétés sélectionnées, c'est-à-dire, des propriétés du terminal mobile sur la base des fonctionnalités de l'interface entre le terminal mobile et le module d'identité d'abonné, et le code IMEI du terminal mobile, au terminal mobile sur l'interface d'application, dans laquelle les moyens sont agencés pour être activés en réponse à la connexion du module d'identité d'abonné et du terminal mobile, c'est-à-dire, automatiquement à chaque fois que le terminal mobile est activé ;
des moyens (321) pour comparer les données de propriétés demandées, c'est-à-dire, les propriétés du terminal mobile sur la base des fonctionnalités de l'interface entre le terminal mobile et le module d'identité d'abonné, et le code IMEI du terminal mobile avec les données mémorisées dans le module d'identité d'abonné ;
des moyens (321) pour transmettre un message concernant les données de propriétés sélectionnées à un serveur prédéterminé et pour mettre à jour les données mémorisées dans le module d'identité d'abonné en réponse au fait que les données de propriétés demandées, c'est-à-dire, soit les propriétés du terminal mobile sur la base des fonctionnalités de l'interface entre le terminal mobile et le module d'identité d'abonné, soit le code IMEI du terminal mobile, sont différentes des données de propriétés mémorisées.

2. Station mobile selon la revendication 1, **caractérisée en ce que** les données de propriétés sélectionnées ont été déterminées dans le module d'identité d'abonné (32) au moyen d'un logiciel d'application qui peut être mis à jour sur l'interface air.

3. Station mobile selon la revendication 1, **caractérisée en ce que** le logiciel d'application est une boîte à outils d'application SIM.

4. Station mobile selon la revendication 3, **caractérisée en ce que** les données sélectionnées comprennent le code IMEI du terminal mobile.

5. Système de télécommunication qui comprend un réseau de communication mobile (34), une station mobile (30) qui fonctionne dans le réseau de communication mobile, et un serveur (361) qui communique avec le réseau de communication mobile, dans lequel la station mobile comprend un terminal mobile (31), un module d'identité d'abonné transférable (32), et une interface d'application (33), c'est-à-dire, une boîte à outils d'application SIM (33), entre le terminal mobile et le module d'identité d'abonné, dans lequel le module d'identité d'abonné comprend des moyens pour mémoriser des données, et le serveur comprend des moyens pour transmettre des données à un abonné mobile et recevoir des données de celui-ci dans le réseau de communication mobile, **caractérisé en ce que** le module d'identité d'abonné (32) de la station mobile comprend :
des moyens (321) pour demander des données de propriétés sélectionnées, c'est-à-dire, des propriétés du terminal mobile sur la base des fonctionnalités de l'interface entre le terminal mobile et le module d'identité d'abonné, et le code IMEI du terminal mobile, au terminal mobile sur l'interface d'application, dans lequel les moyens sont agencés pour être activés en réponse à la connexion du module d'identité d'abonné et du terminal mobile, c'est-à-dire, automatiquement à chaque fois que le terminal mobile est activé ;
des moyens (321) pour comparer les données de propriétés demandées, c'est-à-dire, les propriétés du terminal mobile sur la base des fonctionnalités de l'interface entre le terminal mobile et le module d'identité d'abonné, et le code IMEI du terminal mobile avec les données mémorisées dans le module d'identité d'abonné ;
des moyens (321) pour transmettre un message concernant les données de propriétés sélectionnées à un certain serveur et pour mettre à jour les données mémorisées dans le module d'identité d'abonné en réponse au fait que les données de propriétés demandées, c'est-à-dire, soit les propriétés du terminal mobile sur la base des fonctionnalités de l'interface entre le terminal mobile et le module d'identité d'abonné, soit le code IMEI du terminal mobile, sont différentes des données de propriétés mémorisées ;
et **en ce que** le serveur (361) comprend :
des moyens (364) pour recevoir les données de propriétés sur le terminal mobile de l'abonné mobile ;
une première base de données (366) pour mémoriser un premier ensemble de propriétés sélectionnées du terminal mobile actuellement en utilisation d'une manière spécifique à un abonné mobile.

6. Procédé de fourniture de données de propriétés sur un terminal mobile disponible pour un abonné mobile, **caractérisé par**
la demande (615) de données de propriétés sélectionnées, c'est-à-dire, de propriétés du terminal mobile sur la base des fonctionnalités de l'interface entre le terminal mobile et le module d'identité d'abonné, et du code IMEI du terminal mobile, au terminal mobile sur une interface d'application, c'est-à-dire, une boîte à outils d'application SIM (33), en réponse à la connexion d'un module d'identité d'abonné et du terminal mobile, c'est-à-dire, automatiquement à chaque fois que le terminal mobile est activé ;
la comparaison (620) des données de propriétés demandées, c'est-à-dire, des propriétés du terminal mobile sur la base des fonctionnalités de l'interface entre le terminal mobile et le module d'identité d'abonné, et du code IMEI du terminal mobile avec les données mémorisées dans le module d'identité d'abonné ;
la transmission (635) d'un message concernant les données sélectionnées à un serveur prédéterminé en réponse au fait que les données demandées, c'est-à-dire, soit les propriétés du terminal mobile sur la base des fonctionnalités de l'interface entre le terminal mobile et le module d'identité d'abonné, soit le code IMEI du terminal mobile, sont différentes des données mémorisées ;
la mémorisation (630) d'un premier ensemble de propriétés sélectionnées du terminal mobile actuellement en utilisation d'une manière spécifique à un abonné mobile ;
la mise à jour des données mémorisées dans le module d'identité d'abonné en réponse au fait que les propriétés demandées, c'est-à-dire, soit les propriétés du terminal mobile sur la base des fonctionnalités de l'interface entre le terminal mobile et le module d'identité d'abonné, soit le code IMEI du terminal mobile, sont différentes des données de propriétés mémorisées.
